# EUROPÄISCHE PATENTSCHRIFT

(11) **EP 4 006 497 B1**
(45) Veröffentlichungstag und Bekanntmachung des Hinweises auf die Patenterteilung: **18.03.2026**
(21) Anmeldenummer: 21200623.3
(22) Anmeldetag: 04.10.2021
(51) Int. Cl.: G01D 11/30, F16F 5/00, F16F 7/00, F16F 9/00, F16F 15/00, F16F 15/02

(54) **THERMISCHES ANALYSEGERÄT MIT VIBRATIONSDÄMPFER UND VERFAHREN ZUM ABSCHIRMEN DESSELBEN GEGENÜBER VIBRATIONEN**
MEASURING DEVICE WITH VIBRATION DAMPER AND METHOD FOR SHIELDING A MEASURING DEVICE AGAINST VIBRATIONS
APPAREIL DE MESURE POURVU D'AMORTISSEUR DE VIBRATIONS ET PROCÉDÉ DE PROTECTION D'UN APPAREIL DE MESURE CONTRE LES VIBRATIONS

(30) Priorität: 28.11.2020 DE 102020007279
(43) Veröffentlichungstag der Anmeldung: 01.06.2022
(73) Patentinhaber: Netzsch-Gerätebau GmbH, 95100 Selb (DE)
(72) Erfinder: Blumm, Jürgen, 95100 Selb (DE); Brunner, Martin, 95176 Konradsreuth (DE); Gschwendtner, Reinhard, 95615 Marktredwitz (DE); Krist, Georg, 93346 Ihrlerstein (DE); Wohlfahrt, Fabian, 95111 Rehau (DE)
(74) Vertreter: Isarpatent

(56) Entgegenhaltungen:
- CN-A- 104 062 251
- CN-A- 107 421 861
- JP-B2- 3 484 110
- US-A1- 2018 252 739
- US-A1- 2020 149 639

## Beschreibung

### TECHNISCHES GEBIET DER ERFINDUNG

Die Erfindung betrifft ein Messgerät mit einem Vibrationsdämpfer sowie ein Verfahren zum Abschirmen eines Messgeräts gegenüber Vibrationen.

### TECHNISCHER HINTERGRUND

Messgeräte sind grundsätzlich recht empfindlich gegenüber Umwelteinflüssen, insbesondere gegenüber Vibrationen, Schwingungen oder Stößen. Beim Aufstellen von Messgeräten wäre es daher wünschenswert, eine Entkopplung von Umwelteinflüssen auf die Messgeräte während deren Betriebs erzielen zu können. Verschiedene Ansätze aus dem Stand der Technik beschäftigen sich mit der Absorption von Schwingungen für messtechnische Systeme: Die Druckschrift RU 2124659 C1 beispielsweise offenbart Dämpfungsvorrichtungen zum Schutz von Messinstrumenten und elektronischen Geräten, die dynamischen Einwirkungen ausgesetzt sind. Die Druckschrift DE 20 2017 004 177 U1 offenbart magnetische Dämpfungsfüße für vibrationsempfindliche Geräte nach dem Prinzip der magnetischen Anziehungskraft. Die Druckschrift DE 10 2004 020 605 A1 offenbart Schwingungstilger zum Verringern unerwünschter Schwingungen an Maschinen. Die Druckschrift US 2,158,890 A offenbart einen schockabsorbierenden Verbinder. Die Druckschrift DE 20 2017 004 177 U1 offenbart vibrationsdämpfende Magentabsorber für Audioequipment. CN 107 421 861 A offenbart ein Staubüberwachungsgerät.

### ZUSAMMENFASSUNG DER ERFINDUNG

Eine der Aufgaben der Erfindung besteht daher darin, empfindliche Messgeräte gegenüber Vibrationen, Schwingungen und anderen mechanisch induzierten Oszillationen von außen besser schützen zu können.

Diese und andere Aufgaben werden durch ein Messgerät mit den Merkmalen des Anspruchs 1 sowie durch ein Verfahren mit den Merkmalen des Anspruchs 6 gelöst.

Gemäß einem ersten Aspekt der Erfindung umfasst ein Messgerät ein Gehäuse und einen an dem Gehäuse angebrachten Vibrationsdämpfer.

Ein zweiter Aspekt der Erfindung umfasst ein Verfahren zum Abschirmen eines Messgeräts gegenüber Vibrationen mit den Schritten des Anbringens von einem oder mehreren Vibrationsdämpfern an einem Gehäuse eines Messgerätes.

Eine der wesentlichen Ideen der Erfindung besteht darin, einen Vibrationsdämpfer einzusetzen, um störende Vibrationen, die sich aus der Umgebung auf ein Messgerät übertragen könnten, zu reduzieren oder ganz abzudämpfen. Der Vibrationsdämpfer kann dabei beispielsweise einen Schwingungstilger aufweisen, d.h. ein Masse-Feder-System mit mechanischem Dämpfungsverhalten. Dabei können durch geeignete Implementierung der schwingenden Masse und/oder der Steifigkeit der Federelemente Anregungen oder Übertragungen von Frequenzen in bestimmten Frequenzbereichen vermieden werden. Es können passive Schwingungstilger eingesetzt werden, aber auch adaptive oder aktive Schwingungstilger. Bei letzteren können durch geeignete Aktoren oder Regler Dämpfungseigenschaften der Federelemente gemäß einem Regelsignal geändert werden. Dadurch kann eine Tilgungswirkung in einem großen Betriebsbereich erzielt werden, beispielsweise durch eine Optimierung der Dämpfungswirkung gegenüber sich dynamisch ändernder Anregungsfrequenzen.

Aktive Schwingungstilger können zur Vibrationsdämpfung beispielsweise über elektromagnetische oder elektrodynamische Aktoren gezielte Konterkräfte in ein Messgerät einleiten. Diese Konterkräfte können in Bezug auf Amplitude, Frequenz und/oder Phase auf die jeweiligen Vibrationen von außen eingestellt werden. Aktive Schwingungstilger können dabei insbesondere eine entsprechende Vibrationssensorik aufweisen, mithilfe derer eine leistungselektronische Aktorik gezielt regelt werden kann.

Vorteilhafte Ausgestaltungen und Weiterbildungen ergeben sich aus den weiteren Unteransprüchen sowie aus der Beschreibung unter Bezugnahme auf die Figuren.

Das Messgerät ist ein thermisches Analysegerät.

Der Vibrationsdämpfer ist in einem Gerätefuß des Gehäuses angeordnet.

Gemäß einigen Ausführungsformen des Messgeräts kann der Vibrationsdämpfer eine Dämpfungselementaufnahme und mindestens ein in der Dämpfungselementaufnahme aufgenommenes Dämpfungselement aufweisen. Gemäß einigen Ausführungsformen des Messgeräts kann das Dämpfungselement ein aktiv in den Dämpfungseigenschaften einstellbares Dämpfungselement sein. Dabei kann der Vibrationsdämpfer in manchen Ausführungsformen weiterhin eine Steuereinrichtung aufweisen, welche dazu ausgelegt ist, die Dämpfungseigenschaften des Dämpfungselements einzustellen.

Gemäß einigen Ausführungsformen des Messgeräts kann das Messgerät weiterhin einen Dämpfungsregler umfassen, welcher mit der Steuereinrichtung des Vibrationsdämpfers gekoppelt ist, und welcher dazu ausgelegt ist, der Steuereinrichtung ein Steuersignal zu senden, auf deren Basis die Steuereinrichtung die Dämpfungseigenschaften des Dämpfungselements einstellt. Gemäß einigen Ausführungsformen des Messgeräts kann das Messgerät weiterhin einen Gerätesensor umfassen, welcher mit dem Dämpfungsregler gekoppelt ist, und welcher dazu ausgelegt ist, charakteristische Betriebsbedingungen des Messgeräts zu ermitteln. Dabei kann der Dämpfungsregler in manchen Ausführungsformen dazu ausgelegt sein, das Steuersignal auf der Basis der durch den Gerätesensor ermittelten charakteristischen Betriebsbedingungen des Messgeräts zu erzeugen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen. Die Erfindung ist so, wie sie in den Ansprüchen definiert ist.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines Messgeräts mit einem Vibrationsdämpfer gemäß einer Ausführungsform der Erfindung; und
Fig. 2 ein Flussdiagramm eines Verfahrens zum Abschirmen eines Messgeräts gegenüber Vibrationen gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

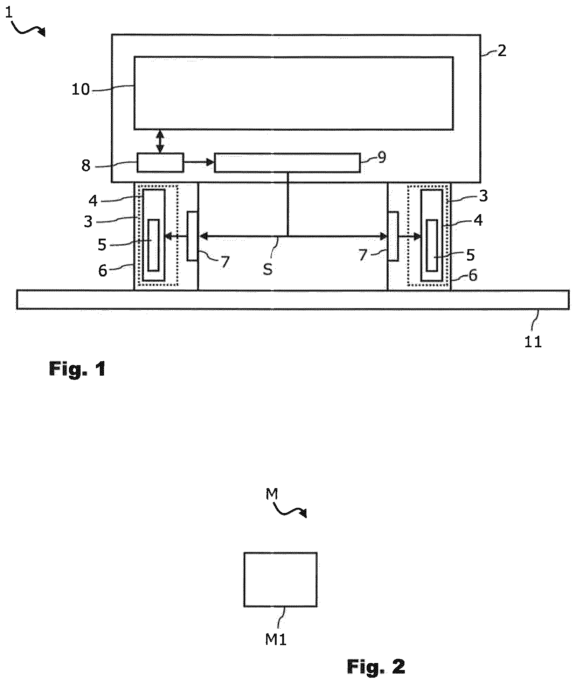

Fig. 1 zeigt ein schematisches Blockschaubild eines Messgerät 1, beispielsweise eines thermischen Analysegerätes, eines Wärmeleitfähigkeitsprüfers, eines Rheometers oder eines Brandprüfsystems. Thermische Analysegeräte können beispielsweise Thermogravimetriegeräte, Dynamische Differenzkalorimetriegeräte, Differenzthermoanalysegeräte oder Emmissionsgas-Thermoanalysegeräte umfassen. Das Messgerät 1 umfasst generell ein Gehäuse 2, in welchem aktive Messelemente 10 des Messgeräts 1 untergebracht sind. Die aktiven Messelemente 10 können beispielsweise Probenträger, Heizelemente, Referenzelemente, Messsensorik und andere Komponenten aufweisen, die für die jeweilige Funktionalität des Messgeräts 1 benötigt werden.

Das Messgerät 1 kann mit dem Gehäuse 2 auf einem Untergrund abgestellt werden, wie beispielsweise einem Tisch 11. Dazu kann das Gehäuse 2 einen oder mehrere Gerätefüße 6 aufweisen, die mit dem Gehäuse 2 verbunden sind und Kontaktflächen für einen Kontakt mit dem Untergrund aufweisen. Über den Untergrund können durch den physischen Kontakt zwischen den Gerätefüßen 6 und dem Untergrund generell Vibrationen, Schwingungen oder andere mechanische Erschütterungen auf das Gehäuse 2 und damit das Messgerät 1 übertragen werden. Diese Vibrationen, Schwingungen oder andere mechanische Erschütterungen können negative Einflüsse auf das Messverhalten des Messgerätes 1 während des Messbetriebes haben, so dass es wünschenswert ist, die mechanischen Beeinträchtigungen soweit wie möglich zu verringern.

Vibrationen, Schwingungen und mechanische Erschütterungen, welche auftreten können, sind beispielsweise eigenerzeugte Schwingungen des Messgeräts 1 oder seiner Komponenten, wie etwa die aktiven Messelemente 10 oder periphere Komponenten wie beispielsweise ein Transformator, eine Recheneinrichtung oder ähnliches.

Hierzu kann das Messgerät 1einen oder mehrere Vibrationsdämpfer 3 aufweisen, die zwischen dem Gehäuse 2 und dem Untergrund 11 als wesentlich einzige physische Verbindung vorhanden sind. Die Vibrationsdämpfer 3 können an dem Gehäuse 2 angebracht sein, insbesondere als fest verbundene oder integrale Teile des Gehäuses 2 bzw. dessen Bodenplatte oder auch als extra anschraubbare, fixierbare oder reversibel lösbare Baugruppen. Beispielsweise können die ein oder mehreren Vibrationsdämpfer 3 in einem oder mehreren Gerätefüßen 6 des Gehäuses 2 angeordnet werden. Im Beispiel der Fig. 1 sind zur Veranschaulichung zwei Gerätefüße 6 mit jeweils einem Vibrationsdämpfer 3 gezeigt, wobei jedoch klar sein sollte, dass jede andere Anzahl von Vibrationsdämpfern 3 und/oder Gerätefüßen 6 ebenfalls möglich ist. Durch die Vibrationsdämpfer 3 kann eine Reduktion sowohl von eigenerzeugten Schwingungen als auch von äußeren Umwelteinflüssen erzielt werden, wodurch eine vom Aufstellort unabhängige Entkopplung realisiert werden kann. Durch die Verwendung von Vibrationsdämpfern 3 kann beispielsweise eine teilweise oder vorläufige Gerätekalibierung des Messgeräts 10 an beliebigen Orten, und insbesondere an anderen Orten als dem bestimmungsgemäßen Betriebsort, erfolgen, so dass eine Auslieferungskalibrierung des Messgeräts 1 vor der Auslieferung vorgenommen werden kann und auch durch einen Ortswechsel nicht oder nicht wesentlich nachjustiert oder am Betriebsort komplett neu vorgenommen werden muss. Des Weiteren erlaubt die Verwendung von Vibrationsdämpfern 3 eine Verwendung des Messgeräts 1 außerhalb bestimmungsgemäßen Verwendungsrandbedingungen, so dass an die Vorgaben hinsichtlich des Betriebsortes weniger restriktive Anforderungen gestellt werden können. Bei Messgeräten 1, bei denen Proben in den aktiven Messelementen 10 eingebracht bzw. gewechselt werden müssen, können unbeabsichtigt durch entweder einen menschlichen Nutzer des Messgerätes 1 oder auch einen automatischen Probenwechsler hervorgerufene mechanische Erschütterungen bessert kompensiert werden. Dies wirkt sich vorteilhaft auf die Langlebigkeit der Probenträger aus, und Messungen können unter Umständen schneller beginnen, da eine Equilibrierungs- und Konditionierungsphase durch die Verwendung der Vibrationsdämpfer 3 verkürzt werden kann.

Die Gerätefüße 6 können beispielsweise über eine Niveauausgleichsautomatik verfügen. Dazu können die Gerätefüße 6 beispielsweise jeweils über einen Motor verfügen, welcher ein Höhenverstellungselement antreibt, um den Abstand der Kontaktfläche des jeweiligen Gerätefußes 6 und der Unterseite des Gehäuses 2 an der Position des Gerätefußes 6 einstellen zu können. Die Ansteuerung der Niveauausgleichsautomatik kann beispielsweise in Abhängigkeit der Messwerte eines Neigungssensors im Messgerät 1 erfolgen.

Wenn die Vibrationsdämpfer 3 in die Gerätefüße 6 eingebaut werden, kann der Wärmehaushalt des Messgeräts 1, insbesondere von thermischen Analysegeräten, durch die Unterbrechung des Wärmeflusses vom Gehäuse 2 zum Untergrund 11 und umgekehrt verbessert werden.

Wie in Fig. 1 gezeigt, kann jeder der Vibrationsdämpfer 3 beispielsweise eine Dämpfungselementaufnahme 4 und mindestens ein in der Dämpfungselementaufnahme 4 aufgenommenes Dämpfungselement 5 aufweist. Das Dämpfungselement 5 kann beispielsweise aus aktiven oder passiven Elementen bestehen. Weiterhin kann das Dämpfungselement 5 auch eine Kombination aus aktiven und passiven Elementen aufweisen.

Das Dämpfungselement 5 kann beispielsweise aktiv in seinen Dämpfungseigenschaften einstellbar sein. Hierzu kann der Vibrationsdämpfer 3 eine Steuereinrichtung 7 aufweisen, die beispielsweise in den Gerätefuß 6 miteingebaut ist oder die in dem Messgerät 1 eingebaut ist. Die Steuereinrichtung 7 dient dazu, die Dämpfungseigenschaften des Dämpfungselement 5 einzustellen, beispielsweise, indem auf Eigenschaften des Dämpfungselementes 5, die die Federwirkung des Dämpfungselementes 5 beeinflussen, regelnd eingewirkt wird.

Das Messgerät 1 kann beispielsweise einen Dämpfungsregler 9 aufweisen, der mit der Steuereinrichtung 7 des Vibrationsdämpfers 3 gekoppelt ist. Von einem Gerätesensor 8, welcher mit dem Dämpfungsregler 9 gekoppelt ist, können charakteristische Betriebsbedingungen des Messgeräts 1 ermittelt werden, beispielsweise Gewichtsasymmetrien des Messgerätes 1, Gewichtsverteilungsänderungen während des Messbetriebes, thermische Veränderungen der Komponenten während der Messung, Umgebungstemperatur, vorherrschender Luftdruck und dergleichen. Diese charakteristischen Betriebsbedingungen werden von dem Gerätesensor 8 an den Dämpfungsregler 9 ausgegeben bzw. übertragen, welcher dann ein Steuersignal S ausgeben kann, das von der Größe der charakteristischen Betriebsbedingungen abhängig ist.

Das Steuersignal S wiederum wird an die Steuereinrichtungen 7 der Vibrationsdämpfer 3 ausgegeben, die ihrerseits die Dämpfungseigenschaften des Dämpfungselements 5 in Abhängigkeit von dem Steuersignal S einstellen können. Dabei kann jeder der Vibrationsdämpfer 3 über ein separates Steuersignal S angesteuert werden. Beispielsweise kann es möglich sein, unterschiedliche Steuersignale S für verschiedene Dämpfungsfreiheitsgrade auszugeben, um beispielsweise Dämpfungseigenschaften in der Ebene des Untergrunds 11 und/oder entlang der Längsrichtung der Dämpfungselemente 5 separat einstellen oder regeln zu können.

Weiterhin kann es möglich sein, die Vibrationsdämpfer 3 zu temperieren, beispielsweise über an den Vibrationsdämpfern 3 angekoppelte Heizelemente. Dadurch kann eine Empfindlichkeit der Vibrationsdämpfer 3 durch aktiv geregelte Heizleistung beeinflusst werden. Beispielsweise kann die Heizleistung in Abhängigkeit von der Temperatur in den aktiven Messelementen 10 eingestellt werden. Zudem kann über eine Heizeinrichtung der Wärmefluss zum Messgerät 1 bzw. vom Messgerät 1 zum Untergrund 11 gezielt beeinflusst werden.

Die Dämpfungselemente 5 des Vibrationsdämpfers 3 können auf den unterschiedlichsten Wirkprinzipien beruhen, beispielsweise hydraulischen, pneumatischen, mechanischen, magnetischen oder viskoelastischen Wirkungen.

Fig. 2 zeigt ein Flussdiagramm eines Verfahrens M zum Abschirmen eines Messgeräts 1 gegenüber Vibrationen. Das Verfahren M kann beispielsweise zum Abschirmend des Messgeräts 1, wie im Zusammenhang mit der Fig. 1 dargestellt und beschrieben, eingesetzt werden. In einem Schritt M1 des Verfahrens M werden ein oder mehrere Vibrationsdämpfer 3 an einem Gehäuse 2 eines Messgerätes 1 angebracht. Die Vibrationsdämpfer 3 können an dem Gehäuse 2 angebracht werden, insbesondere als fest verbundene oder integrale Teile des Gehäuses 2 bzw. dessen Bodenplatte oder auch als extra anschraubbare, fixierbare oder reversibel lösbare Baugruppen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Thermisches Analysegerät (1), umfassend:
ein Gehäuse (2) mit einem oder mehreren Gerätefüßen (6) zum Aufstellen des Gehäuses (2) auf einem Untergrund;
in dem Gehäuse (2) untergebrachte aktive Messelemente (10), welche Probenträger aufweisen; und
ein oder mehrere am Gehäuse (2) angebrachte Vibrationsdämpfer (3), wobei: der eine oder die mehreren Vibrationsdämpfer (3) jeweils in dem einen oder den mehreren Gerätefüßen (6) des Gehäuses (2) angeordnet sind.

2. Thermisches Analysegerät (1) gemäß Anspruch 1, wobei der Vibrationsdämpfer (3) eine Dämpfungselementaufnahme (4) und mindestens ein in der Dämpfungselementaufnahme (4) aufgenommenes Dämpfungselement (5) aufweist.

3. Thermisches Analysegerät (1) gemäß Anspruch 2, wobei das Dämpfungselement (5) ein aktiv in den Dämpfungseigenschaften einstellbares Dämpfungselement (5) ist und wobei der Vibrationsdämpfer (3) weiterhin eine Steuereinrichtung (7) aufweist, welche dazu ausgelegt ist, die Dämpfungseigenschaften des Dämpfungselements (5) einzustellen.

4. Thermisches Analysegerät (1) gemäß Anspruch 3, weiterhin mit einem Dämpfungsregler (9), welcher mit der Steuereinrichtung (7) des Vibrationsdämpfers (3) gekoppelt ist, und welcher dazu ausgelegt ist, der Steuereinrichtung (7) ein Steuersignal (S) zu senden, auf deren Basis die Steuereinrichtung (7) die Dämpfungseigenschaften des Dämpfungselements (5) einstellt.

5. Thermisches Analysegerät (1) gemäß Anspruch 4, weiterhin mit:
einem Gerätesensor (8), welcher mit dem Dämpfungsregler (9) gekoppelt ist, und welcher dazu ausgelegt ist, charakteristische Betriebsbedingungen des Messgeräts (1) zu ermitteln, wobei der Dämpfungsregler (9) dazu ausgelegt ist, das Steuersignal (S) auf der Basis der durch den Gerätesensor (8) ermittelten charakteristischen Betriebsbedingungen des Messgeräts (1) zu erzeugen.

6. Verfahren (M) zum Abschirmen eines thermischen Analysegeräts gemäß einem der Ansprüche 1 bis 5 gegenüber Vibrationen, umfassend:
Anbringen (M1) von einem oder mehreren Vibrationsdämpfern (3) jeweils in einem oder mehreren Gerätefüßen (6) des Gehäuses (2) des thermischen Analysegeräts (1).

## Claims

1. Thermal analysis device (1), comprising:
a housing (2) having one or more device feet (6) for placing the housing (2) on a support;
active measuring elements (10) that are accommodated in the housing (2),
which include sample carriers; and
one or more vibration dampers (3) that are attached to the housing (2),
wherein:
the one or more vibration dampers (3) are in each case arranged in the one or more device feet (6) of the housing (2).

2. Thermal analysis device (1) in accordance with claim 1, wherein the vibration damper (3) includes a damping element receiving arrangement (4) and at least one damping element (5) that is accommodated in the damping element receiving arrangement (4).

3. Thermal analysis device (1) in accordance with claim 2, wherein the damping element (5) is a damping element (5) that can be actively adjusted in the damping properties, and wherein the vibration damper (3) further includes a control device (7) that is configured so as to adjust the damping properties of the damping element (5).

4. Thermal analysis device (1) in accordance with claim 3, further having a damping regulator (9) that is coupled to the control device (7) of the vibration damper (3) and that is configured so as to transmit a control signal (S) to the control device (7), on the basis of which the control device (7) adjusts the damping properties of the damping element (5).

5. Thermal analysis device (1) in accordance with claim 4, further having:
a device sensor (8) that is coupled to the damping regulator (9) and that is designed so as to determine characteristic operating conditions of the measuring device (1), wherein the damping regulator (9) is designed so as to generate the control signal (S) on the basis of the characteristic operating conditions of the measuring device (1) that are determined by means of the device sensor (8).

6. Method (M) for shielding a thermal analysis device in accordance with one of claims 1 to 5 against vibrations, comprising:
attaching (M1) one or more vibration dampers (3) in each case in one or more device feet (6) of the housing (2) of the thermal analysis device (1).

## Revendications

1. Appareil d'analyse thermique (1), comprenant :
un boîtier (2) avec un ou plusieurs pieds d'appareil (6) pour poser le boîtier (2) sur un support ;
des éléments de mesure actifs (10) logés dans le boîtier (2) qui comportent des porte-échantillons ; et
un ou plusieurs amortisseurs de vibrations (3) fixés au boîtier (2), dans lequel :
les un ou plusieurs amortisseurs de vibrations (3) sont respectivement disposés dans les un ou plusieurs pieds d'appareil (6) du boîtier (2).

2. Appareil d'analyse thermique (1) selon la revendication 1, dans lequel l'amortisseur de vibrations (3) comporte un logement d'élément d'amortissement (4) et au moins un élément d'amortissement (5) logé dans le logement d'élément d'amortissement (4).

3. Appareil d'analyse thermique (1) selon la revendication 2, dans lequel l'élément d'amortissement (5) est un élément d'amortissement (5) dont les propriétés d'amortissement peuvent être réglées de façon active et dans lequel l'amortisseur de vibrations (3) comporte en outre un dispositif de commande (7) qui est conçu pour régler les propriétés d'amortissement de l'élément d'amortissement (5).

4. Appareil d'analyse thermique (1) selon la revendication 3, ayant en outre un régulateur d'amortissement (9) qui est couplé au dispositif de commande (7) de l'amortisseur de vibrations (3) et qui est conçu pour envoyer au dispositif de commande (7) un signal de commande (S) sur la base duquel le dispositif de commande (7) règle les propriétés d'amortissement de l'élément d'amortissement (5).

5. Appareil d'analyse thermique (1) selon la revendication 4, comportant en outre :
un capteur d'appareil (8) qui est couplé au régulateur d'amortissement (9) et qui est conçu pour déterminer des conditions de fonctionnement caractéristiques de l'appareil de mesure (1), dans lequel le régulateur d'amortissement (9) est conçu pour générer le signal de commande (S) sur la base des conditions de fonctionnement caractéristiques de l'appareil de mesure (1) déterminées par le capteur d'appareil (8).

6. Procédé (M) pour protéger un appareil d'analyse thermique selon l'une des revendications 1 à 5 contre les vibrations, comprenant de :
fixer (M1) un ou plusieurs amortisseurs de vibrations (3) respectivement dans un ou plusieurs pieds d'appareil (6) du boîtier (2) de l'appareil d'analyse thermique (1).
